# EUROPEAN PATENT SPECIFICATION

(11) **EP 0 691 227 B1**
(45) Date of publication and mention of the grant of the patent: **23.02.2000**
(21) Application number: 95110411.6
(22) Date of filing: 04.07.1995
(51) Int. Cl.: B60H 1/00, B60J 7/16, F24F 7/013

(54) **Porthole for mobile vehicles and fixed structures**
Dachentlüfter für Fahrzeuge und feste Bauwerke
Ventilateur de toit pour véhicules mobiles et structures fixes

(30) Priority: 08.07.1994 IT MI940488
(43) Date of publication of application: 10.01.1996
(73) Proprietor: Pozzi, Carlo Maurizio, CH-6977 Ruvigliana (CH)
(72) Inventor: Pozzi, Carlo Maurizio, CH-6977 Ruvigliana (CH)
(74) Representative: Modiano, Guido, Dr.-Ing.

(56) References cited:
- DE-B- 1 003 057
- DE-B- 1 036 669
- DE-U- 8 702 989
- FR-A- 1 558 431
- US-A- 4 633 769

## Description

The present invention relates to a porthole to be installed on the roof of mobile vehicles and of fixed structures and comprising a fan, wherein the lid of the porthole is moved by actuation means arranged above the fan and operated manually by the user with manual or electric operating means.

Portholes to be installed on the roof of mobile vehicles (such as caravans, motor homes, and the like) and/or of fixed structures to allow adequate ventilation of the enclosed space have been known and used for a long time: these portholes are usually provided with a lid (rigidly coupled to one side of the frame of the porthole by means of one or more hinges or other equivalent coupling means) that is moved from the inside of the enclosed space by virtue of actuation means operated by a crank (or other equivalent manual means) that is actuated by the user or by an electric motor operated by the user by means of a switch or a multiple-function selector; the expression "operating means" will be used hereinafter to designate both a crank and an electric motor.

Italian Utility Model No. 218,992 discloses a porthole which does not include a fan and wherein the lid actuation means (operated by the user by means of a crank) are located in the central region of the porthole in order to apply their action in a region of the lid coinciding as much as possible with its longitudinal axis of symmetry, stiffening said lid and making it stabler and less subject to the effect of the wind and/or of the air flow that strikes it during the motion of the vehicle.

These simple and functional actuation means have proved themselves perfectly adequate for the type of porthole they were designed and produced for; however, the practice of equipping the porthole with a fan to facilitate air-changing inside the enclosed space is becoming increasingly widespread; in order to achieve optimum fan efficiency, the internal opening of the porthole should be round and its diameter should be slightly larger than that of the fan impeller. Accordingly, in portholes of the type disclosed in the above mentioned Utility Model, the crank that operates the lid actuation means, located above the fan, can no longer be accessed by the user owing to the presence of the fan impeller.

If the actuation means are operated by an electric motor, it is impossible (or in any case very difficult) to apply a fan, since the available space is insufficient to install both the fan and the electric motor, the presence whereof would in any case constitute a hindrance to the air flow, reducing the efficiency of said fan.

In order to obviate these drawbacks, portholes have been produced and marketed which are equipped with a fan and wherein the lid actuation means are located and act at a lateral region of the porthole that lies outside the disk of the fan impeller, so that the corresponding operating means do not interfere with the fan impeller and the user can therefore reach them without difficulty.

In these portholes, the actuation means perform their action in a region of the lid that is distant from its longitudinal axis of symmetry, said lid being therefore less stable, more intensely affected by the wind and/or by the air flow that strikes the lid during the motion of the vehicle, and more intensely stressed at the hinge.

DE-C-1 003 057 discloses a porthole for motor vehicles which is automatically opened or closed by means of a temperature-sensitive element (15) which acts upon a lever 13 which in turn is connected to lids (5). The lids can be opened or closed by the action of the lever which is arranged outside the area covered by the lids and a fan is provided behind the lids to draw in fresh air from the outside. An other known porthole for motor vehicles can be found in US-A-4 633 769.

The porthole according to the present invention obviates the drawbacks of known portholes, since the lid actuation means are located above the fan, act proximate to the longitudinal axis of symmetry of the lid, and are operated by the user by virtue of operating means located in a region of the porthole that lies outside the disk of the fan impeller and mechanically coupled to the lid actuation means. The problem is solved by the characterizing portion of claim 1.

The invention is described hereinafter in greater detail with reference to a non-limitative embodiment thereof, illustrated in the accompanying drawing figures, wherein:
figure 1 is a bottom view of a porthole according to the invention, wherein part of the covering of the mechanical coupling means has been removed;
figure 2 is a cross-sectional view of the porthole of figure 1, as seen according to the direction of arrow A of figure 1 and along the plane A-A.

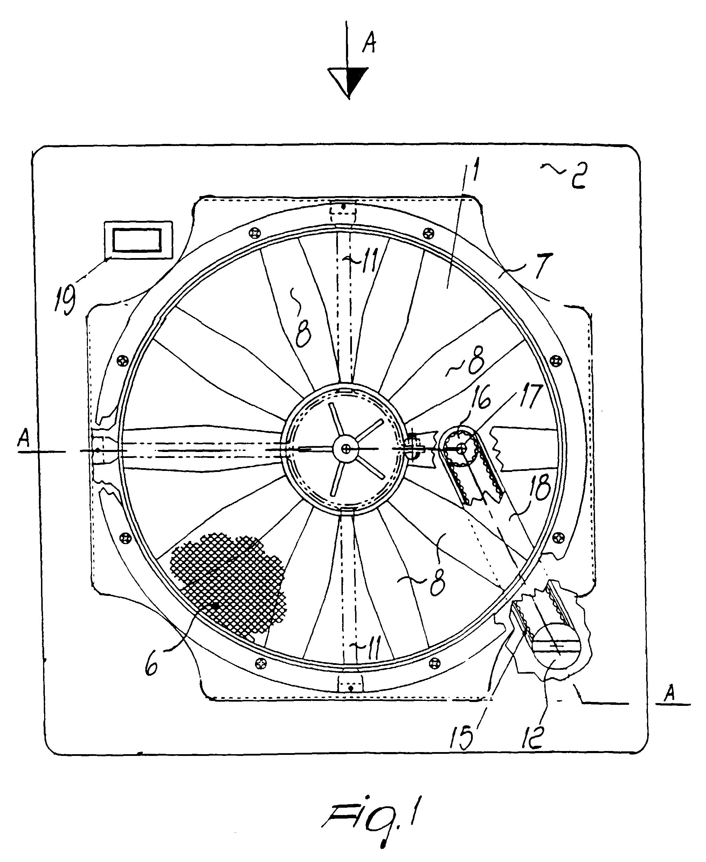

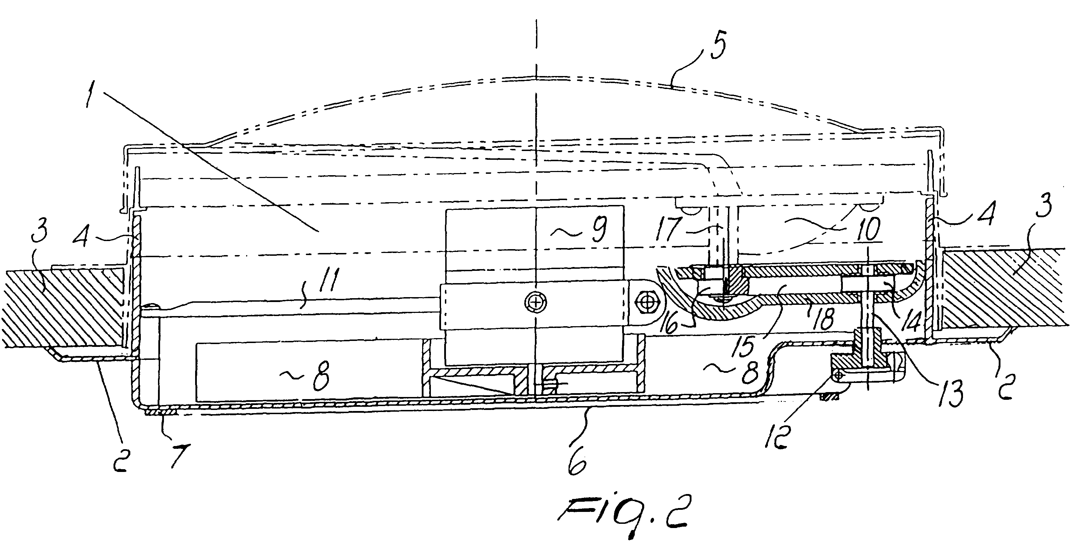

Figure 1 is a bottom view of a porthole 1 provided according to the invention, wherein the means 10 for actuating the lid 5 (figure 2) are operated by the user through the crank 12, which constitutes the operating means; in figure 1, part of the covering 18 of the means that mechanically couple the crank 12 to the actuation means 10 of the lid 5 has been removed to better show said mechanical coupling means.

The figure shows the porthole 1, which is constituted by a substantially quadrangular flat element 2 fixed to the ceiling 3 (figure 2) of the space to be ventilated, and by a substantially cylindrical body 4 (figure 2), the outside opening whereof being closed by a lid 5 (figure 2), whereas the opening inside the space to be ventilated is preferably closed by a fine-mesh net 6 (or other equivalent means) that is retained in place in a per se known manner, for example by means of the ring 7: for the sake of simplicity in graphic illustration, only a small portion of the net 6 has been shown in figure 1.

A fan is located in the cylindrical body 4 of the porthole 1 and is constituted by an impeller comprising a plurality of vanes 8 and driven by an electric motor 9 (figure 2) or by another equivalent means that is operated by the user by means of the switch 19 (or other equivalent means, such as for example a multiple-function selector) located on the flat element 2 of the porthole 1: the motor 9 is retained in its seat by one or more pairs of fixing brackets 11.

The actuation means 10, which act proximate to the axis of symmetry of the lid 5 and are not described in further detail hereinafter since they are per se known (for example from Italian Utility Model No. 218,992), are operated by the user by means of the crank 12, located on the flat element 2 of the porthole 1 and mechanically coupled to the actuation means 10: in the embodiment shown in the figures, a sprocket 14 (figure 2) is keyed on the axis 13 (figure 2) of the crank 12 and is connected, by means of a belt 15 (preferably but not necessarily a toothed belt), to a similar sprocket 16 keyed on the input shaft 17 (figure 2) of the actuation means 10; without abandoning the scope of the invention, however, it is possible to mechanically couple the crank 12 to the actuation means 10 through an intermediate shaft coupled respectively to the shaft 13 of the crank 12 and to the shaft 17 of the actuation means 10, by means of pairs of bevel gears, universal joints, or other functionally equivalent mechanical coupling means.

The covering 18 of the mechanical coupling means is preferably but not necessarily constituted by an elongated body having a U-shaped cross-section and adapted to protect said mechanical coupling means.

Figure 2 is a cross-sectional view of the porthole 1, as seen according to the direction of the arrow A of figure 1 and along the plane A-A and shows in particular the means (13 to 17) that allow to mechanically couple the operating means 12 to the actuation means 10, shown in dashed lines and not illustrated in the present description (together with further mechanical and/or constructive details of the porthole 1) since they are per se known and are in any case outside the scope of the present invention.

Without abandoning the scope of the invention, it is possible, for a person skilled in the art, to apply to the porthole according to the present invention any modifications and improvements suggested by ordinary experience and by the natural evolution of technology.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A porthole for mobile vehicles and fixed structures, equipped with a fan and comprising a lid (5) moved by actuation means (10) which are operated by a user through operating means (12), characterized in that said actuation means (10) are arranged over said fan and act proximate to the longitudinal axis of symmetry of said lid (5), and in that said operating means (12) are accommodated in a region of said porthole (1) that lies outside the disk of the fan impeller and protrude under a region in which the fan impeller is accommodated, under the area defined by the lid, said operating means (12) being mechanically coupled to said actuation means (10) of said lid (5) and being hand-operable by the user located under said porthole.

2. Porthole according to claim 1, characterized in that said mechanical coupling means comprise a first sprocket (14) keyed on the output shaft (13) of said operating means (12), a second sprocket (16) keyed on the input shaft (17) of said actuation means (10), and a belt (15) that mutually connects said first and second sprockets (14, 16).

3. Porthole according to claim 2, characterized in that said belt (15) that mutually connects said first and second sprockets (14, 16) is a toothed belt.

4. Porthole according to claim 1, characterized in that said mechanical coupling means comprise an intermediate shaft that is mechanically connected to said output shaft (13) of said operating means (12) and to said input shaft (17) of said actuation means (10).

5. Porthole according to claim 4, characterized in that said intermediate shaft is mechanically coupled to said output shaft (13) of said operating means (12) and to said input shaft (17) of said actuation means (10) by virtue of pairs of bevel gears.

6. Porthole according to claim 4, characterized in that said intermediate shaft is mechanically coupled to said output shaft (13) or said operating means (12) and to said input shaft (17) of said actuation means (10) through universal joints.

## Patentansprüche

1. Dachentlüfter für Fahrzeuge und feste Bauwerke, welcher mit einem Ventilator ausgerüstet ist und einen durch Betätigungsmittel (10) bewegbaren Deckel (5) umfaßt, welche vom Benutzer durch Bedienmittel (12) betätigt werden, **dadurch gekennzeichnet**, daß diese Betätigungsmittel (10) oberhalb des Ventilators angeordnet sind und nahe der Symmetrielängsachse des Deckels (5) wirken, und daß die Bedienmittel (12) in einem Bereich des Dachentlüfters (1) untergebracht sind, der außerhalb der Rotorfläche des Ventilatorrads liegt und unter einen Bereich übersteht, in welchem das Ventilatorrad untergebracht ist, unterhalb der durch den Deckel definierten Fläche, wobei die Bedienmittel (12) mit den Betätigungsmitteln (10) des Deckels (5) mechanisch gekoppelt und durch den unterhalb des Dachentlüfters befindlichen Benutzer von Hand betätigbar sind.

2. Dachentlüfter nach Anspruch 1, **dadurch gekennzeichnet**, daß die mechanischen Kopplungsmittel umfassen ein erstes mit der Ausgangswelle (13) der Bedienmittel (12) verkeiltes Kettenrad (14), ein zweites mit der Eingangswelle (17) der Betätigungsmittel (10) verkeiltes Kettenrad (16) und einen Riemen (15), welcher die ersten und zweiten Kettenräder (14, 16) gegenseitig miteinander verbindet.

3. Dachentlüfter nach Anspruch 2, **dadurch gekennzeichnet**, daß der Riemen (15), welcher die ersten und zweiten Kettenräder (14,16 ) gegenseitig miteinander verbindet, ein Zahnriemen ist.

4. Dachentlüfter nach Anspruch 1, **dadurch gekennzeichnet**, daß die mechanischen Kopplungsmittel umfassen eine Zwischenwelle, welche mechanisch mit der Ausgangswelle (13) der Bedienmittel (12) und der Eingangswelle (17) der Betätigungsmittel (10) verbunden ist.

5. Dachentlüfter nach Anspruch 4, **dadurch gekennzeichnet**, daß die Zwischenwelle mechanisch mit der Ausgangswelle (13) der Bedienmittel (12) und der Eingangswelle (17) der Betätigungsmittel (10) mittels zweier Kegelradgetriebe verbunden ist.

6. Dachentlüfter nach Anspruch 4, **dadurch gekennzeichnet**, daß die Zwischenwelle mechanisch mit der Ausgangswelle (13) der Bedienmittel (12) und der Eingangswelle (17) der Betätigungsmittel (10) durch Universalgelenke verbunden ist.

## Revendications

1. Dispositif à ouverture pour des véhicules mobiles et des structures fixes, équipé d'un ventilateur et comprenant un couvercle (5) déplacé par des moyens d'actionnement (10) qui sont manoeuvrés par un utilisateur par l'intermédiaire de moyens de manoeuvre (12),
caractérisé en ce que lesdits moyens d'actionnement (10) sont agencés au-dessus dudit ventilateur et fonctionnent à proximité de l'axe longitudinal de symétrie dudit couvercle (5), et en ce que lesdits moyens de manoeuvre (12) sont reçus dans une région dudit dispositif à ouverture (1) qui s'étend à l'extérieur du disque du corps du ventilateur et font saillie sous une région dans laquelle le corps du ventilateur est logé, sous la zone définie par le couvercle, lesdits moyens de manoeuvre (12) étant mécaniquement accouplés auxdits moyens d'actionnement (10) dudit couvercle (5) et étant manoeuvrables manuellement par l'utilisateur situé sous ledit dispositif.

2. Dispositif à ouverture selon la revendication 1,
caractérisé en ce que lesdits moyens d'accouplement mécanique comprennent une première roue dentée (14) clavetée sur l'arbre de sortie (13) desdits moyens de manoeuvre (12), une seconde roue dentée (16) clavetée sur l'arbre d'entrée (17) desdits moyens d'actionnement (10), et une courroie (15) qui relie mutuellement lesdites première et seconde roues dentées (14,16).

3. Dispositif à ouverture selon la revendication 2,
caractérisé en ce que ladite courroie (15), qui relie mutuellement lesdites première et seconde roues (14,16), est une courroie crantée.

4. Dispositif à ouverture selon la revendication 1,
caractérisé en ce que lesdits moyens d'accouplement mécanique comprennent un arbre intermédiaire qui est relié mécaniquement audit arbre de sortie (13) desdits moyens de manoeuvre (12) et audit arbre d'entrée (17) desdits moyens d'actionnement (10).

5. Dispositif à ouverture selon la revendication 4,
caractérisé en ce que ledit arbre intermédiaire est mécaniquement accouplé audit arbre de sortie (13) desdits moyens de manoeuvre (12) et audit arbre d'entrée (17) desdits moyens d'actionnement (10) par l'intermédiaire de paires de pignons coniques.

6. Dispositif à ouverture selon la revendication 4,
caractérisé en ce que ledit arbre intermédiaire est mécaniquement accouplé audit arbre de sortie (13) desdits moyens de manoeuvre (12) et audit arbre d'entrée (17) desdits moyens d'actionnement (10) par des joints de Cardan.
